# EUROPEAN PATENT APPLICATION

(11) **EP 4 653 804 A1**
(43) Date of publication of application: **26.11.2025**
(21) Application number: 25177397.4
(22) Date of filing: 19.05.2025
(51) Int. Cl.: G01B 7/04

(54) **ADAPTER FOR PROBE PURGE AND COOLING**

(30) Priority: 21.05.2024 US 202418670203
(71) Applicant: RTX Corporation, Farmington, CT 06032 (US)
(72) Inventor: WARREN, Eli, Bend, 97703-8475 (US); DREGER, Edward F., Burlington, 06013 (US); HARRINGTON, Patrick M., Niantic, 06357 (US); HACKETT, Bryan James, Berlin, 06037 (US)
(74) Representative: Dehns

(57) **Abstract**

An adapter (200; 300) includes a cup (201; 301) having an inner portion (203; 303) proportioned to retain a sensor probe (250) such that a face (251) of the sensor probe (250) is exposed to an interior of a gas turbine, where the inner portion (203; 303) includes a sidewall (205; 305) and a lip (207; 307). The cup (201; 301) also includes one or more channels (209A, 209B, 209C; 309A, 309B, 309C) extending along the sidewall (205; 305) and across the lip (207; 307). The adapter (200; 300) includes a mounting flange (221; 321), where the one or more channels (209A...309C) are configured to direct a gas from an exterior of the gas turbine across the face (251) of the sensor probe (250).

## Description

### TECHNICAL FIELD

This disclosure relates generally to gas turbines. More specifically, this disclosure relates to an adapter for a probe disposed in a gas turbine engine.

### BACKGROUND

Industry-wide design trends for gas turbine engines have heightened focus on fuel efficiency and optimizing overall system performance and have spurred the desire for real-time data of operating parameters of all stages of gas turbine engines, as well as sensors for obtaining the same. Blade tip clearance, or the distance between the tip of a turbine blade and an outer air seal, is correlative of turbine efficiency and performance and acts as a leading indicator of present or imminent fault conditions with a turbine. As such, obtaining accurate real-time blade tip clearance data can be of paramount importance to ensuring optimum operation of a gas turbine engine.

Blade tip clearance sensors come in a variety of types, such as eddy current sensors, inductive sensors, and tip-timing sensors, and can obtain blade tip clearance data based on a variety of measured parameters. Each sensor type offers its own portfolio of tradeoffs between performance and durability. Capacitive blade tip clearance sensors, which measure the clearance between a blade tip and a sensor based on measured capacitance between one or more electrodes of the sensor and the passing metal turbine blade, represent for many applications the best available choice in that they are accurate and can withstand high temperatures and pressures present in the combustion stages of gas turbine engines. Despite their advantages, capacitive sensors still have various challenges. Such challenges can include a susceptibility to fouling by metallic contaminants (such as material shed by abradable blade tips or abradable coatings on outer air seals) that can cause destructive short-circuits between the electrodes and installation challenges (such as when weld sites are difficult to access and when welds between a capacitive blade tip clearance sensor and an outer air seal cannot be heat treated).

### SUMMARY

This disclosure relates to an adapter for a probe disposed in a gas turbine engine.

In an aspect of the present invention, an adapter includes a cup having an inner portion proportioned to retain a sensor probe such that a face of the sensor probe is exposed to an interior of a gas turbine, where the inner portion includes a sidewall and a lip. The cup also includes one or more channels extending along the sidewall and across the lip. The adapter includes a mounting flange, where the one or more channels are configured to direct a gas from an exterior of the gas turbine across the face of the sensor probe.

In an embodiment of the above, the one or more channels comprise a plurality of flutes disposed around a perimeter of the sidewall of the cup.

In an embodiment according to any of the previous embodiments, the inner portion of the cup comprises a plurality of lands providing weld sites for attaching the sensor probe to the adapter.

In an embodiment according to any of the previous embodiments, the cup is not concentric with the mounting flange.

In an embodiment according to any of the previous embodiments, the mounting flange is saddle-shaped to conform to a cylindrical profile of a mounting surface of the gas turbine.

In an embodiment according to any of the previous embodiments, the one or more channels comprise fillets in the sidewall of the cup.

In an embodiment according to any of the previous embodiments, the fillets extend from the lip to the mounting flange.

In an embodiment according to any of the previous embodiments, at least one of the fillets is configured to create a flow of cooler gas across the face of the sensor probe parallel to a flow of hotter gas within the gas turbine.

In an embodiment according to any of the previous embodiments, one or more spaces between the fillets define a plurality of lands providing weld sites for attaching the sensor probe.

In an embodiment according to any of the previous embodiments, the adapter is formed from a metal that is heat treatable after being welded to the gas turbine.

In another aspect of the present invention, a method includes providing an adapter, where the adapter includes a cup. The cup includes an inner portion proportioned to retain a sensor probe such that a face of the sensor probe is exposed to an interior of a gas turbine, where the inner portion includes a sidewall and a lip. The cup also includes one or more channels extending along the sidewall and across the lip, where the adapter includes a mounting flange. The method also includes positioning the adapter in an orifice in a member of the gas turbine, where the member has a hot side disposed towards a flow of hot gas during use and a cool side disposed towards a flow of cooler gas during use such that the cup passes through the orifice toward the hot side and the mounting flange contacts the member on the cool side. The method further includes creating a first weld attaching the adapter to the cool side of the member and positioning the sensor probe within the cup. In addition, the method includes creating a second weld attaching the sensor probe to the adapter, where the one or more channels are configured to direct gas from the cool side across the face of the sensor probe.

In an embodiment of the above, the method further comprises heat treating the first weld before positioning the sensor probe within the cup.

In an embodiment according to any of the previous embodiments, the member comprises a back outer air seal (BOAS) of the gas turbine.

In an embodiment according to any of the previous embodiments, the one or more channels comprise a plurality of flutes disposed around a perimeter of the sidewall of the cup.

In an embodiment according to any of the previous embodiments, the inner portion of the cup comprises a plurality of lands providing weld sites for attaching the sensor probe to the adapter and the second weld is created at a land of the plurality of lands.

In an embodiment according to any of the previous embodiments, the cup is not concentric with the mounting flange.

In an embodiment according to any of the previous embodiments, the one or more channels comprise fillets in the sidewall of the cup.

In an embodiment according to any of the previous embodiments, the fillets extend from the lip to the mounting flange.

In an embodiment according to any of the previous embodiments, wherein one or more spaces between the fillets define a plurality of lands providing weld sites for attaching the sensor probe.

In an embodiment according to any of the previous embodiments, the second weld is created at a land of the plurality of lands.

Other technical features may be readily apparent to one skilled in the art from the following figures, descriptions, and claims.

### BRIEF DESCRIPTION OF THE DRAWINGS

For a more complete understanding of this disclosure, reference is made to the following description, taken in conjunction with the accompanying drawings, in which:
FIGURES 1A & 1B illustrate an example of one kind of sensor fouling which can be mitigated by apparatus and methods according to this disclosure;
FIGURES 2A-2D illustrate multiple views of an example adapter for purging the face of a sensor probe of contaminants according to this disclosure;
FIGURES 3A-3E illustrate examples of adapters for purging the face of a sensor probe according to this disclosure; and
FIGURE 4 illustrates operations of an example method for installing a sensor probe according to this disclosure.

### DETAILED DESCRIPTION

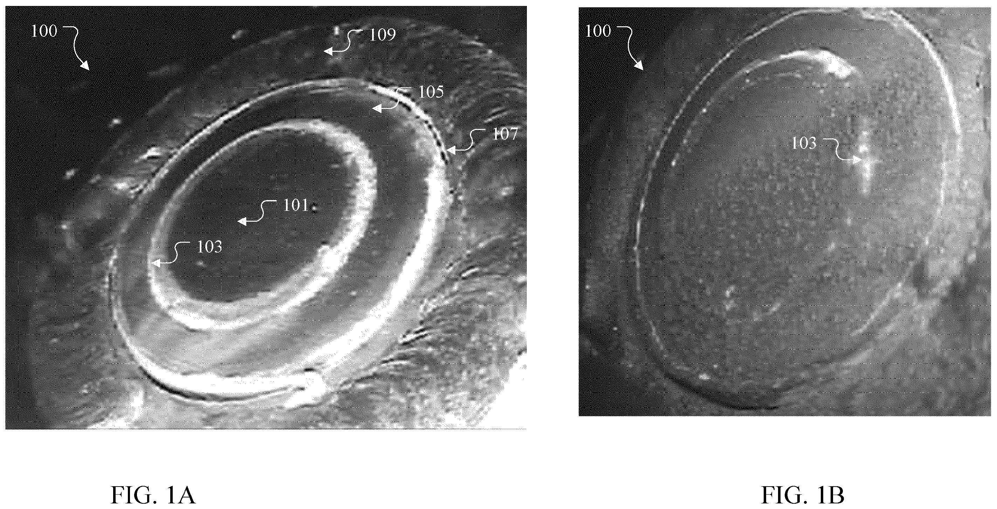

FIGURES 1 through 4, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

As noted above, external pressures have amplified concerns about the efficiency, condition, and performance of gas turbine engines. Blade tip clearance ("BTC"), in particular BTC in the hot parts of a gas turbine engine, can be an essential metric of system performance and efficiency and is a leading indicator of potential problems with the system, such as blockages. While capacitive BTC sensors excel along many dimensions of performance, they are vulnerable to failure in at least the following two regards. First, the materials used to make such probes are susceptible to heat-related failures at around 2300°F (1260°C). Second, capacitive BTC probes are susceptible to accumulation of metallic contaminants on faces of the probes, creating probe-destroying short-circuits. While thermal breakdown from overheating BTC probes can be mitigated by directing cooler air from behind a BTC probe towards a probe welded into the body of the turbine, such air cooling by itself fails to stop accumulation of debris on the face of the probe. Where the debris contains metallic particles, such as from abradable blade tips or other sources of metallic dust, merely cooling the probe does not prevent such accumulations of metallic debris.

To illustrate a technical problem addressed by certain embodiments according to this disclosure, FIGURES 1A and 1B provide borescope of a BTC sensor before and after a testing period. For consistency and convenience of cross-reference, elements common to both FIGURES 1A and 1B are numbered similarly.

FIGURE 1A is a borescope picture showing a BTC sensor 100 welded into an aperture in a back outer air seal (BOAS) 150 within the combustion stage of a gas turbine as it appears prior to testing. In this example image, BTC sensor 100 is not attached to BOAS 150 using an adapter according to embodiments of this disclosure but rather is welded to the aperture in accordance with standard industry practice. FIGURES 1A and 1B show the face (the portion facing the turbine blades) of BTC sensor 100. The face of BTC sensor 100 includes a first circular-shaped electrode 101, which is surrounded by a first insulator 103 that is surrounded by a second annulus-shaped electrode 105. BTC sensor 100 obtains blade tip clearance values based on the capacitance provided by a blade tip as it passes near first electrode 101 and second electrode 105. An outer insulator 107 electrically isolates BTC sensor 100 from the perimeter weld 109, by which BTC sensor 100 is joined to BOAS 150. In this example, perimeter weld 109 is a green (such as not heat-treated) weld. In this example, BTC sensor 100 is able to receive cooling gas at the back of the sensor.

FIGURE 1B is a second borescope picture showing BTC sensor 100 during the testing period. Attention is directed to the accumulation of debris across the face of BTC sensor 100 and the fact that first insulator 103 is no longer a continuous annulus but rather has been buried and bridged by debris. In this case, the debris caked upon the face of BTC sensor 100 contains metallic particles, creating a short-circuit between first electrode 101 and second electrode 105 and rendering BTC sensor 100 inoperable. Given the importance of BTC data, destruction by metallic fouling is clearly undesirable. As such, this disclosure provides an adapter for purging sensors of a gas turbine engine of destructive contaminants and providing improved cooling of such sensors.

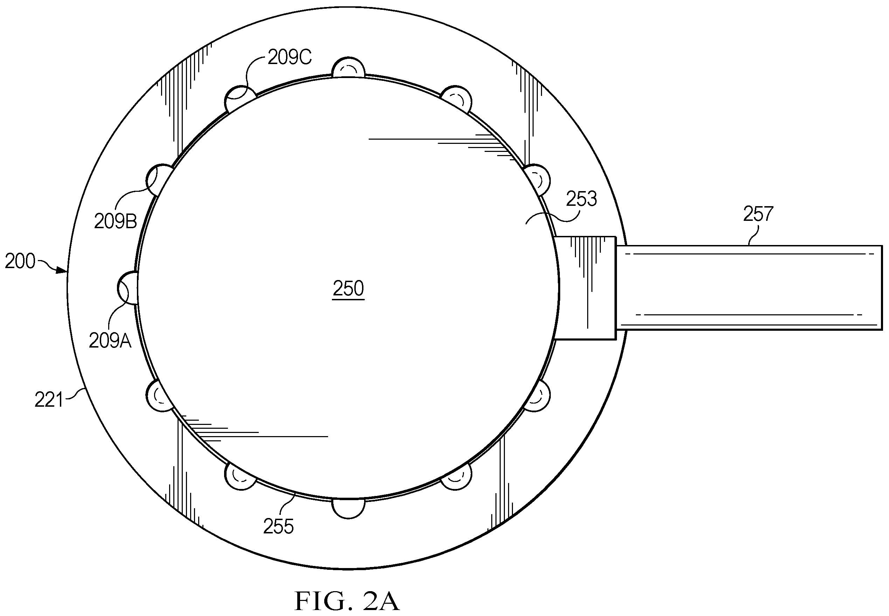

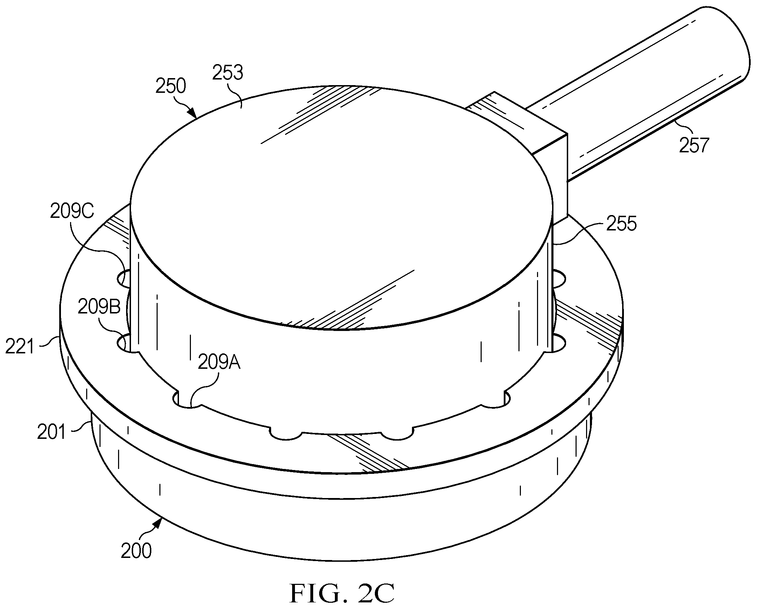

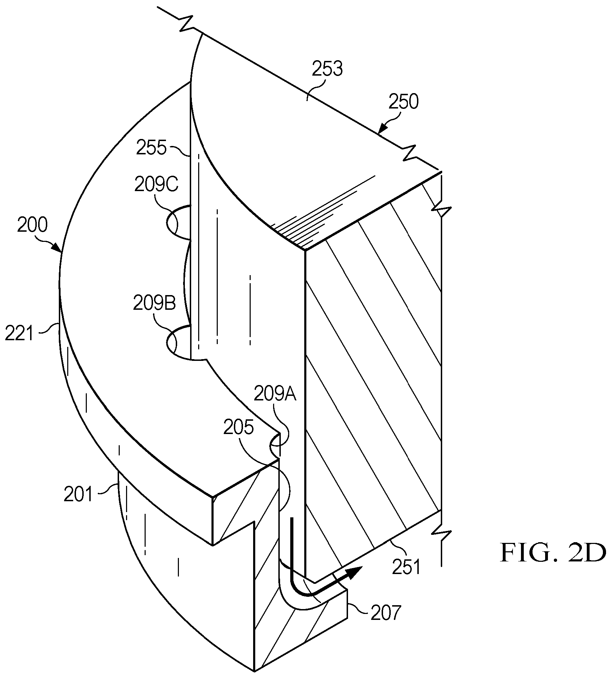

FIGURES 2A-2D illustrate multiple views of an example adapter 200 for purging in-turbine probes (such as BTC probes) of contaminants and providing improved probe cooling according to embodiments of this disclosure. For consistency and convenience of cross-reference, elements common to more than one of FIGURES 2A-2D are numbered the same.

Referring to the illustrative examples of FIGURES 2A-2D, a sensor probe 250 (such as BTC probe 100 in FIGURES 1A-1B) and an adapter 200 according to embodiments of this disclosure are shown. Sensor probe 250 is an electrical/electronic probe with a face 251 configured to face an operating environment within a gas turbine (such as an outer air seal). While not required, in many embodiments, the performance of sensor probe 250 is typically degraded by the accumulation of metallic and other particulate matter on face 251. Probe 250 also includes a back 253, which in many embodiments can be disposed in a comparatively cooler part of the gas turbine. Thus, while face 251 of sensor probe 250 can (if disposed in the combustion stage of a turbine) be exposed to temperatures approaching 2100-2200°F (1149-1204°C), the air flowing over and around back 253 can be significantly cooler (such as around 1000°F (538°C)). As shown in FIGURES 2A-2D, sensor probe 250 further includes one or more sidewalls 255 connecting between face 251 and back 253. Taken together, face 251, back 253, and one or more sidewalls 255 define a housing for sensor probe 250, within which may be disposed additional sensing componentry. As shown in the figures, at least part of the one or more sidewalls 255 and back 253 are disposed in the flow of comparatively cooler gas, which cools sensor probe 250 and diminishes the likelihood of heat-induced failure of the sensor due to the comparatively hotter gas passing over face 251. At least one of face 251 or sidewalls 255 can be made of a weldable material (such as steel). In addition, sensor probe 250 can include a probe lead 257 having a section of a heat-resistant conduit through which wires connecting sensor probe 250 to other diagnostic or other components can pass. As shown in the figures, probe lead 257 is disposed within the path of the comparatively cooler gas. Depending on the embodiment, probe lead 257 may be more susceptible to damage from heat than other parts of sensor probe 250.

As noted elsewhere in this disclosure, welding sensor probe 250 directly to an aperture formed in a turbine body (such as BOAS 299) presents a variety of technical challenges. The challenges associated with direct welding include, without limitation, the absence of any mechanism for clearing the face of sensor probe 250 of contaminants, which as shown with reference to FIGURES 1A-1B can lead to catastrophic failure of sensor probe 250. The challenges associated with direct welding sensor probes inside an existing aperture also include spatial constraints (such as when there is limited space behind an air seal) limiting the number of locations at which welds can be made between the sensor probe and the turbine body. Additionally, because of their sensitivity to extreme heat, direct welds between sensor probe 250 and the aperture cannot be heat-treated, which is undesirable.

To resolve the technical problems associated with contaminant buildup on the face of sensor probe 250, as well as access and heat treatment issues associated with welding sensor probe 250 in place, sensor probe 250 can be attached indirectly to body portions of a turbine, such as BOAS 299, via an adapter 200 according to embodiments of this disclosure. As shown in FIGURES 2A-2D, adapter 200 includes one or more sections of weldable heat-resistant metal (such as pure nickel, Ni-Cu alloys, Ni-Mo alloys, Ni-Cr-Mo alloys, or Ni-Cr-Fe alloys) defining a cup 201 and a mounting flange 221. In simple terms, cup 201 can be shaped like a cup with a hole in the bottom. When sensor probe 250 is installed in cup 201, face 251 is exposed to the inner portion of a gas turbine (such as adjacent to the blade tips of a fan assembly). Mounting flange 221 meets an exterior portion of cup 201 and extends radially outward from a center point. Mounting flange 221 serves at least two functions. First, it retains cup 201 and prevents cup 201 from being pushed through the aperture in BOAS 299. Second, mounting flange 221 provides additional surface area (and thus more options) for welding adapter 200 to BOAS 299. According to some embodiments, adapter 200 can be inserted (without sensor probe 250) into an aperture in BOAS 299 and welded to BOAS 299 along one or more points along mounting flange 221. Typically, mounting flange 221 has a much lower profile (such as when it does not protrude as far upwards from BOAS 299) than sensor probe 250, and attaching mounting flange 221 separately from sensor probe 250 facilitates easy installation in that the one or more sidewalls 255 and back 253 of sensor probe 250 are not in the way. Further, the welds attaching adapter 200 to BOAS 299 can be heat-treated prior to installing sensor probe 250.

While mounting flange 221 in FIGURES 2A-2D includes a flat annular section of metal, embodiments according to the present disclosure are not limited thereto. In some embodiments, mounting flange 221 can be shaped to conform to a curved or otherwise nonplanar section of a gas turbine. For example, in some embodiments, mounting flange 221 can be saddle-shaped in order to sit flush on the interior of a cylindrical surface. Mounting flange 221 can also be formed from any suitable material or materials.

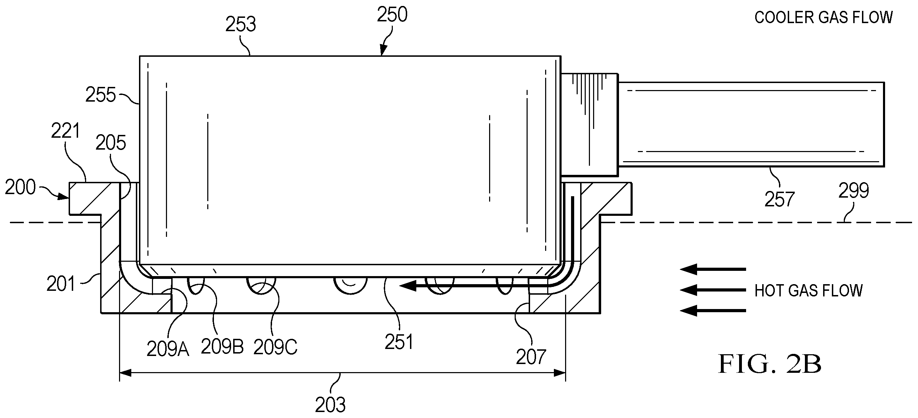

In the illustrative example of FIGURES 2A-2D, adapter 200 further includes one or more channels (such as channels 209A-209C), which extend along sidewall 205 and across lip 207. As shown in FIGURE 2B, the one or more channels 209A-209C provide ports for drawing cool air from one side of BOAS 299 and across face 251 of sensor probe 250. The directed gas flow provided by the one or more channels 209A-209C across face 251 improves performance. For example, the redirected cool clean gas from the backside of BOAS 299 can purge sensor probe 250 of contaminants on face 251, thereby preventing the build-up of conductive material that could short out sensor probe 250 or otherwise degrade its performance. As shown in the figures, the flow of comparatively cooler, cleaner gas across the face 251 parallels the flow of hotter gas within the turbine, thereby minimizing the risk of turbulence or previously purged contaminants returning to face 251.

As shown in FIGURES 2A-2D, sensor probe 250 is installed in the interior portion 203 of cup 201 and retained in interior portion 203 by non-heat-treated welds joining sensor probe 250 to adapter 200. Possible advantages of using adapter 200 as an interstitial mounting surface for sensor probe 250 may include significantly improved access for welding the sensor probe 250 in place. With the "direct welding" approach, a technician installing sensor probe 250 would place the welds holding sensor probe 250 in place where he or she could. By using adapter 200, the technician can now place the welds where he or she wants. This is due in large part to the fact that, for a given placement of face 251, the distance between a weld site on mounting flange 221 and back 253 of sensor probe 250 is lower than the distance between BOAS 299 and back 253. This shortened distance increases the range of angles at which a tool can reach a weld site on mounting flange 221 before bumping into back 253, relative to the range of angles at which the same tool can reach a weld site on BOAS 299 before bumping into mounting flange 221.

The technical benefits associated providing adapter 200 as an intermediate structure between sensor probe 250 and BOAS 299 include the fact that adapter 200 can be formed of a material specifically chosen for its amenability and suitability for welding in a way that neither the materials used for BOAS 299 and sensor probe 250 can be. As skilled artisans will appreciate, the materials used for BOAS 299 need to be optimized for heat resistance and dimensional stability under thermal and physical pressure. Similarly, the materials for sensor probe 250 are selected to be optimized to withstand heat and support sensor probe 250's operation and accuracy. Welding compatibility between BOAS 299 and sensor probe 250 is, for designers of BOAS 299 and sensor probe 250, often a tertiary factor or non-factor in the design of these components. However, adapter 200 can be formed from a variety of materials, including alloys which weld to sensor probe 250 and BOAS 299 better than these materials weld to one another.

As shown in the figures, cup 201 includes an inner portion 203 into which sensor probe 250 fits and is retained. Inner portion 203 includes the one or more sidewalls 205 and the lip 207. Lip 207 is configured to contact a first portion of face 251 of sensor probe 250 while leaving a second portion of face 251 exposed to the interior of the gas turbine.

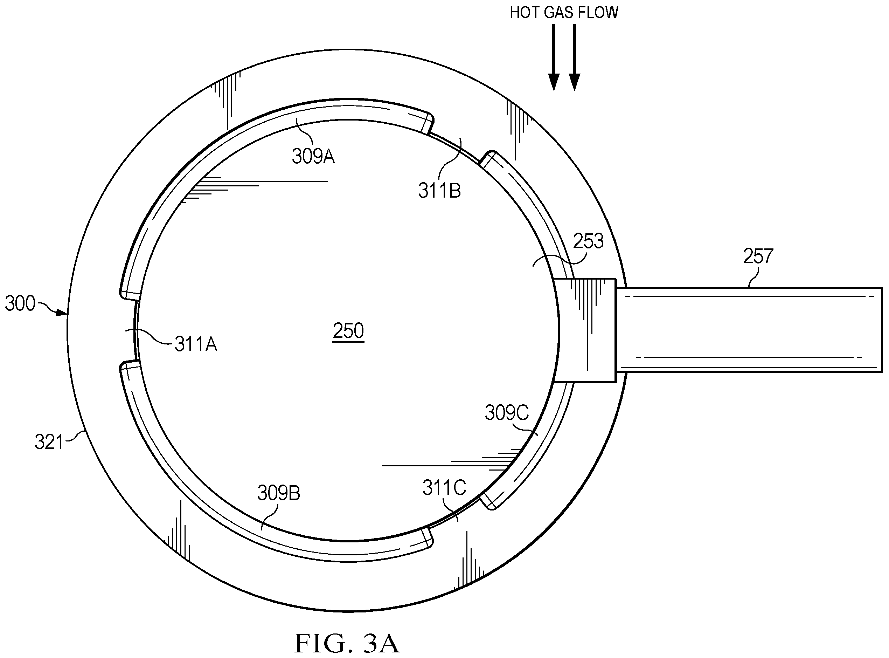

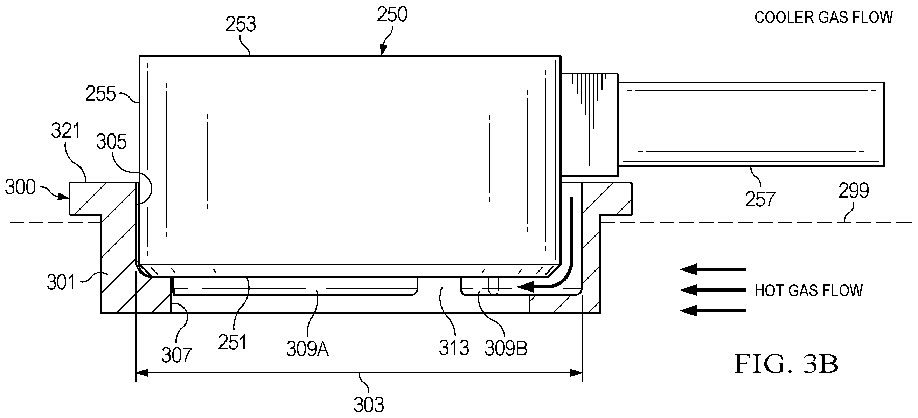

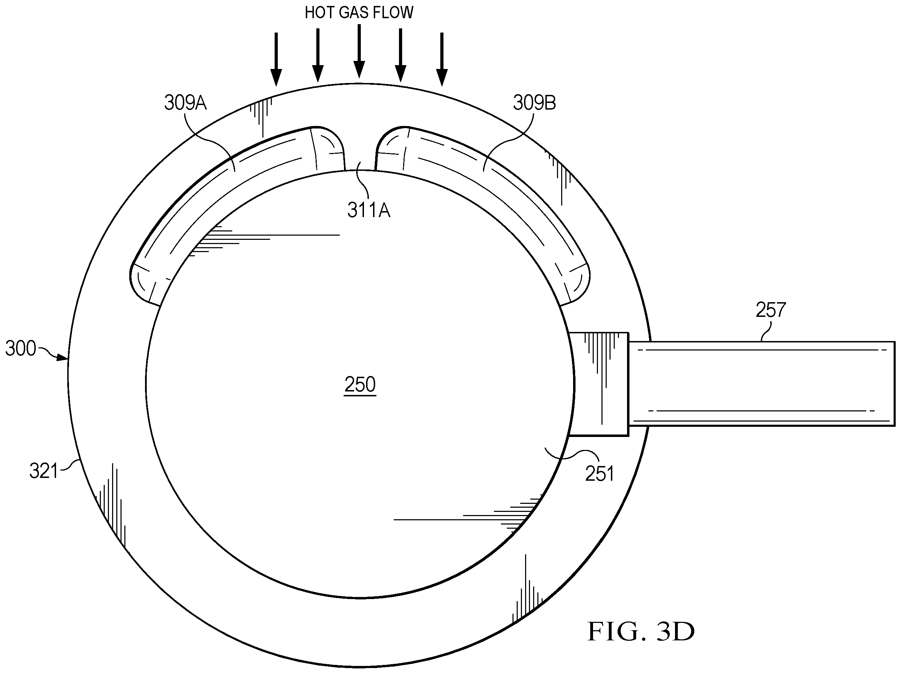

FIGURES 3A-3E illustrate variations of another example embodiment of an interstitial adapter 300 for a sensor probe according to this disclosure. For consistency and convenience of cross-reference, elements already described with reference to FIGURES 2A-2D or that are common to more than one of FIGURES 3A-3E are numbered similarly.

As shown in the figures, adapter 300 includes one or more sections of metal or other material defining a cup 301 and a mounting flange 321. Cup 301 includes an inner portion 303, where the inner portion includes one or more sidewalls 305 and a lip 307 that collectively retain sensor probe 250 within adapter 300. At the same time, face 251 is left exposed to a region of analytical interest within the gas turbine.

As already described with reference to mounting flange 221 in FIGURES 2A-2D, mounting flange 321 in FIGURES 3A-3E extends radially from cup 301 to provide a surface to which adapter 300 can be welded to a surface of a turbine (such as BOAS 299) with a predefined aperture. As shown in the figures, adapter 300 includes a plurality of channels (such as channels 309A-309C), which extend along sidewalls 305 to lip 307 and are configured to direct moving gas from the comparatively cooler gas flow across the face 251 on sensor probe 250, thereby further cooling sensor probe 250. Equally importantly, this purges face 251 of any contaminants that might otherwise accumulate and degrade the performance of sensor probe 250.

As shown in FIGURES 3A-3E, adapter 300 differs from adapter 200 in FIGURES 2A-2D primarily with regard to the shape of the channels for guiding gas from a comparatively cool part of a gas turbine to the hot face 251 of sensor probe 250. As shown in the figures, instead of the flute-shaped channels shown in FIGURES 2A-2D, the channels of adapter 300 are flute-shaped and extend along a greater portion of the inner circumference of adapter 300. As further shown in FIGURES 3A-3E, the space between the channels defines one or more lands (such as lands 311A-311C) on the sidewalls 305 of cup 301, as well as one or more lands (such as land 313) on lip 307 of cup 301. In addition to holding sensor probe face 251 above the portions of channel lip 307, sidewall lands 311A-311C and lip lands 313 provide good weld sites for attaching sensor probe 250 to adapter 300. As noted elsewhere in this disclosure, while the welds attaching adapter 300 to a portion of a gas turbine (such as BOAS 299) can be heat-treated before attaching sensor probe 250, the welds attaching sensor probe to adapter 300 cannot be so heat-treated. However, by using lands adjacent to the channels passing gas from the relatively cooler gas flow to face 251 as weld sites, not being able to heat-treat the welds attaching sensor probe 250 to adapter 300 becomes less of an issue. This is because the lands are cooled by the gas moving towards face 251 and thus are exposed to less thermal stress.

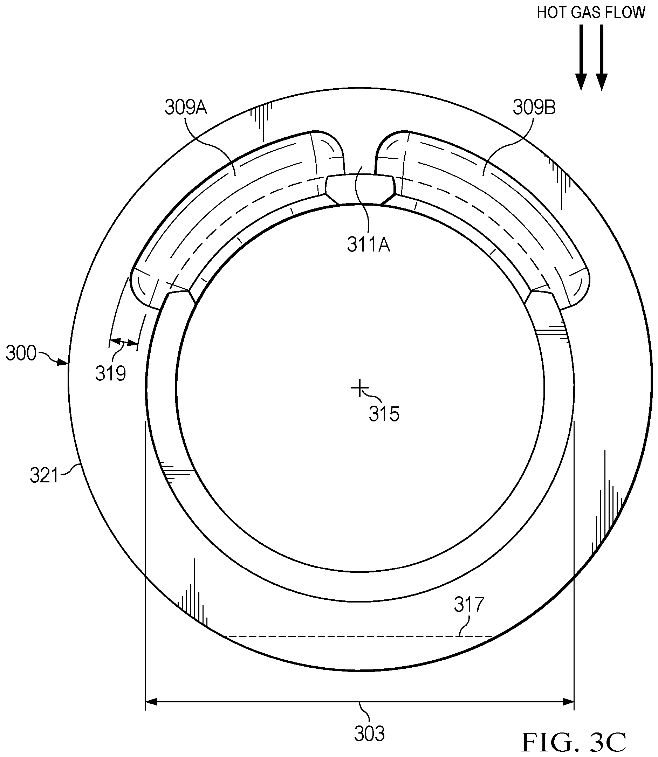

As shown in FIGURES 3A-3E, embodiments according to this disclosure encompass embodiments in which the constituent structures of adapter 300 can be asymmetrical to each other. For example, as shown in FIGURES 3C-3E, channel 309C has been removed, leaving only channels 309A and 309B disposed to face the flow of cooler gas.

For practical and technical reasons, modifying existing apertures and boreholes within a gas turbine to reposition sensor probe 250 or to solve installation challenges is not an option in many cases. However, the benefits of adapter 300 include the fact that adapter 300 can be modified to reposition sensor probe 250 or to solve installation problems. For example, mounting flange 321 can be trimmed to facilitate installation in a tight space. Additionally, in certain embodiments, cup 301 can be shifted such that the center point of inner portion 303 is shifted relative to a center point for mounting flange 321 in order to shift the location of sensor probe 250 within a gas turbine.

Additionally, the profile of the fillets defining the channels for directing relatively cool gas towards face 251 can be modified. For example, the radius of curvature of a transition area 319 can be increased or decreased to suit the performance requirements of a particular application. For example, in some embodiments, the radius of curvature of transition 319 can be decreased to create a "squarer" and more open entrance to channel 309B, thereby allowing more gas to flow. Alternatively, the radius of curvature of transition 319 can be increased to reduce local stresses in adapter 300.

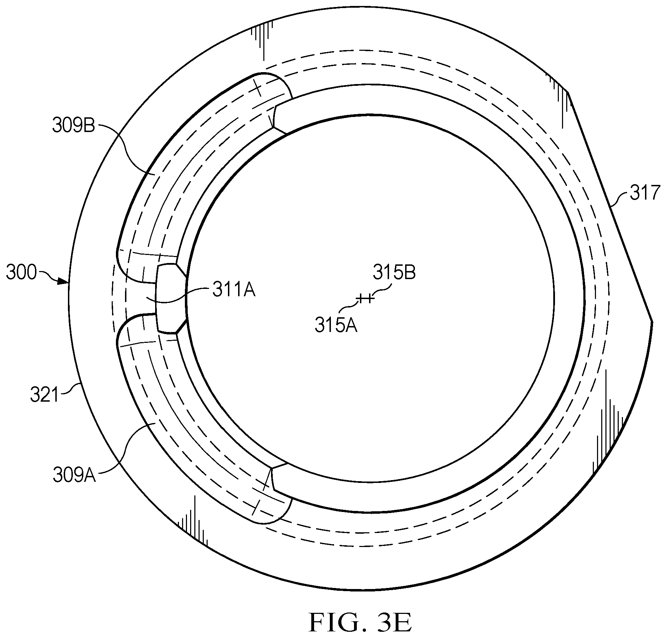

FIGURE 3E illustrates a further embodiment of adapter 300 in which cup 301 has been made eccentric to lip 307. In this example, center point 315B of cup 301 is shifted laterally relative to center point 315A of lip 307, and lip 307 has been made asymmetrical due to the removal of material along cut line 317. Skilled artisans will appreciate that the eccentricities shown in FIGURE 3E are illustrative, rather than limitative of embodiments according to this disclosure, and embodiments with further or different eccentricities or asymmetries are possible and within the contemplated scope of this disclosure. For example, the interior and exterior walls of cup 301 can be made eccentric to each other (for example, when installing a non-circular sensor probe in a pre-existing circular hole).

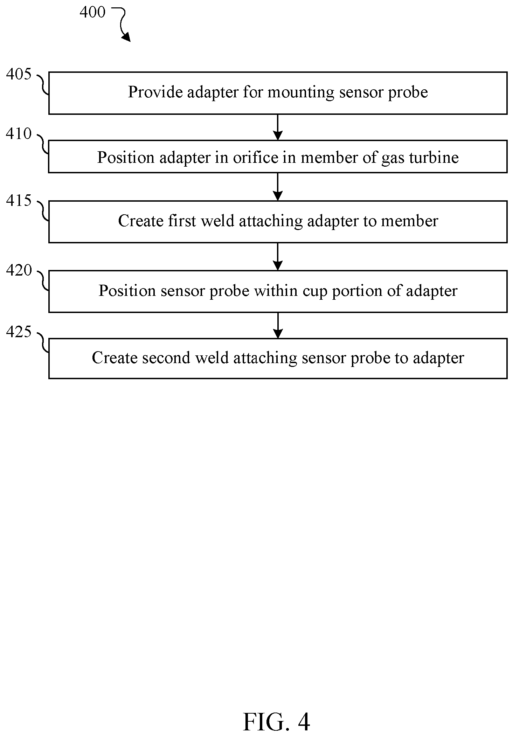

FIGURE 4 illustrates operations of an example method 400 for attaching a sensor probe (such as sensor probe 250 in FIGURES 2A-2D) in an orifice (such as a pre-cut orifice in BOAS 299) according to this disclosure. Referring to the illustrative example of FIGURE 4, at operation 405, an adapter (such as adapter 200 in FIGURES 2A-2D or adapter 300 in FIGURES 3A-3D) is provided. The adapter can include a cup having an inner portion with one or more sidewalls and a lip, where the inner portion both retains the sensor probe and exposes a face of the inner probe (such as face 251) to a region of interest within the gas turbine.

At operation 410, the adapter is positioned in the orifice in the gas turbine. As noted elsewhere in this disclosure, by installing a sensor probe in two steps according to this disclosure, the process of installation is improved (such as there is more wiggle room for welding apparatus), and the quality of installation is improved in that the welds attaching the adapter to the gas turbine can be heat treated before separately installing the sensor probe. At operation 415, at least one first weld (and possible more than one first weld) is created, where the weld is formed between the mounting flange of the adapter and a portion of the gas turbine. Though not required, the one or more first welds attaching the adapter to the gas turbine can be heat treated to enhance their strength and the material properties of the weld.

At operation 420, the sensor probe is positioned within the cup portion of the adapter such that the channels in the sidewall and extending across the lip of the cup create ports for directing comparatively cooler gas (such as gas on the back side of a BOAS) towards the face of the sensor probe, which is directly exposed to a flow of comparatively hotter (such as 2000°F (1093°C) or more) gas containing particulate contaminants. Because the adapter is already installed, at operation 420, the position of the sensor probe can be easily rotationally and axially adjusted within the cup to ensure an optimum position of the sensor probe relative to the region of interest within the gas turbine (such as at a proper distance from blade tips) and within the mounting space (such as by directing the probe lead like probe lead 257) of the gas turbine.

At operation 425, one or more second welds are created, securing the sensor probe only to the adapter. In some embodiments, the one or more second welds are not heat-treated. Also, in some embodiments, the one or more second welds are formed on lands on the sidewall(s) or lip of the inner portion of the cup and are cooled by the flow of gas from the comparatively cooler part of the gas turbine towards the face of the probe sensor provided by the channels in the adapter. In this way, any risks or downsides associated with not being able to heat-treat the one or more second welds are mitigated by the fact that the second welds are cooled by the passage of cooler gas towards the face of the sensor probe.

It may be advantageous to set forth definitions of certain words and phrases used throughout this patent document. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. An adapter (200; 300) comprising:
a cup (201; 301), wherein the cup (201; 301) comprises:
an inner portion (203; 303) proportioned to retain a sensor probe (250) such that a face (251) of the sensor probe (250) is exposed to an interior of a gas turbine, wherein the inner portion (203; 303) comprises a sidewall (205; 305) and a lip (207; 307);
one or more channels (209A, 209B, 209C; 309A, 309B, 309C) extending along the sidewall (205; 305) and across the lip (207; 307); and
a mounting flange (221; 321);
wherein the one or more channels (209A...309C) are configured to direct a gas from an exterior of the gas turbine across the face (251) of the sensor probe (250).

2. The adapter (200; 300) of Claim 1, wherein the one or more channels (209A...309C) comprise a plurality of flutes disposed around a perimeter of the sidewall (205; 305) of the cup (201; 301).

3. The adapter (200; 300) of Claim 1 or 2, wherein the inner portion (203; 303) of the cup (201; 301) comprises a plurality of lands (311A, 311B, 311C) providing weld sites for attaching the sensor probe (250) to the adapter (200; 300).

4. The adapter (200; 300) of Claim 1, 2 or 3, wherein the cup (201; 301) is not concentric with the mounting flange (221; 321).

5. The adapter (200; 300) of any preceding claim, wherein the mounting flange (221; 321) is saddle-shaped to conform to a cylindrical profile of a mounting surface of the gas turbine.

6. The adapter (200; 300) of any preceding claim, wherein the one or more channels (209A...309C) comprise fillets in the sidewall (205; 305) of the cup (201; 301), and optionally wherein the fillets extend from the lip (207; 307) to the mounting flange (221; 321).

7. The adapter (200; 300) of Claim 6, wherein at least one of the fillets is configured to create a flow of cooler gas across the face (251) of the sensor probe (250) parallel to a flow of hotter gas within the gas turbine, and/or wherein one or more spaces between the fillets define a plurality of lands (311A...311C) providing weld sites for attaching the sensor probe (250).

8. The adapter (200; 300) of any preceding claim, wherein the adapter (200; 300) is formed from a metal that is heat treatable after being welded to the gas turbine.

9. A method comprising:
providing an adapter (200; 300), wherein the adapter (200; 300) includes a cup (201; 301), the cup (201; 301) including an inner portion (203; 303) proportioned to retain a sensor probe (250) such that a face (251) of the sensor probe (250) is exposed to an interior of a gas turbine, wherein the inner portion (203; 303) includes a sidewall (205; 305) and a lip (207; 307), the cup (201; 301) also including one or more channels (209A, 209B, 209C; 309A, 309B, 309C) extending along the sidewall (205; 305) and across the lip (207; 307), wherein the adapter (200; 300) includes a mounting flange (221; 321);
positioning the adapter (200; 300) in an orifice in a member (150; 299) of the gas turbine, wherein the member (150; 299) has a hot side disposed towards a flow of hot gas during use and a cool side disposed towards a flow of cooler gas during use such that the cup (201; 301) passes through the orifice toward the hot side and the mounting flange (221; 321) contacts the member on the cool side;
creating a first weld attaching the adapter (200; 300) to the cool side of the member;
positioning the sensor probe (250) within the cup (201; 301); and
creating a second weld attaching the sensor probe (250) to the adapter (200; 300);
wherein the one or more channels (209A...309C) are configured to direct gas from the cool side across the face (251) of the sensor probe (250).

10. The method of Claim 9, further comprising heat treating the first weld before positioning the sensor probe (250) within the cup (201; 301).

11. The method of Claim 9 or 10, wherein the member (150; 299) comprises a back outer air seal (BOAS) of the gas turbine, and/or wherein the one or more channels (209A...309C) comprise a plurality of flutes disposed around a perimeter of the sidewall (205; 305) of the cup (201; 301).

12. The method of Claim 9, 10 or 11, wherein:
the inner portion (203; 303) of the cup (201; 301) comprises a plurality of lands (311A, 311B, 311C) providing weld sites for attaching the sensor probe (250) to the adapter (200; 300); and
the second weld is created at a land of the plurality of lands (311A...311C).

13. The method of any of Claims 9 to 12, wherein the cup (201; 301) is not concentric with the mounting flange (221; 321).

14. The method of any of Claims 9 to 13, wherein the one or more channels (209A...309C) comprise fillets in the sidewall (205; 305) of the cup (201; 301), and optionally wherein the fillets extend from the lip (207; 307) to the mounting flange (221; 321).

15. The method of Claim 14, wherein one or more spaces between the fillets define a plurality of lands (311A...311C) providing weld sites for attaching the sensor probe (250), and optionally wherein the second weld is created at a land of the plurality of lands (311A...311C).
